# FASCICULE DE BREVET EUROPEEN

(11) **EP 4 599 515 B1**
(45) Date de publication et mention de la délivrance du brevet: **22.04.2026**
(21) Numéro de dépôt: 23767930.3
(22) Date de dépôt: 14.09.2023
(51) Int. Cl.: H02K 15/32, H02K 3/52, H02K 11/33

(54) **DISPOSITIF DE CONNEXION ÉLECTRIQUE ENTRE UNE MACHINE ÉLECTRIQUE ET UN MODULE D'ÉLECTRONIQUE DE PUISSANCE**
VORRICHTUNG ZUR ELEKTRISCHEN VERBINDUNG ZWISCHEN EINER ELEKTRISCHEN MASCHINE UND EINEM LEISTUNGSELEKTRONIKMODUL
DEVICE FOR ELECTRICAL CONNECTION BETWEEN AN ELECTRIC MACHINE AND A POWER ELECTRONICS MODULE

(30) Priorité: 07.10.2022 FR 2210311
(43) Date de publication de la demande: 13.08.2025
(73) Titulaire: Ampere SAS, 92100 Boulogne-Billancourt (FR)
(72) Inventeur: BOISADAN, Fabrice, 78084 Guyancourt (FR); MARCHAL, Nicolas, 78084 Guyancourt (FR); MAUDET, Frederic, 78084 Guyancourt (FR)
(74) Mandataire: Renault Group
(86) Numéro de dépôt international: PCT/EP2023/075323
(87) Numéro de publication internationale: WO 2024/074280

(56) Documents cités:
- EP-A1- 3 872 968
- WO-A1-2021/220760
- US-A1- 2020 195 083
- US-A1- 2020 313 373
- US-A1- 2021 344 251
- US-A1- 2023 039 361

## Description

La présente invention se rapporte au domaine de l'électrotechnique et concerne plus précisément un dispositif de connexion électrique entre une machine électrique et un module d'électronique de puissance.

Dans un véhicule électrique ou hybride électrique, le moteur électrique de traction/ propulsion est alimenté par un courant alternatif formé par un module d'électronique de puissance, lui-même alimenté en courant continu par une batterie électrique dite haute tension, c'est-à-dire de l'ordre de plusieurs centaines de volts. Le moteur électrique de traction/propulsion est généralement une machine électrique polyphasée utilisée en mode moteur ou générateur suivant l'utilisation du véhicule. Le module d'électronique de puissance loge un onduleur, et éventuellement un chargeur électrique utilisé lors d'une charge de la batterie électrique haute tension.

Or le compartiment moteur d'un véhicule hybride électrique doit loger, en plus d'une machine électrique, d'un module d'électronique de puissance et d'une batterie électrique haute tension, les composants d'un autre groupe motopropulseur, par exemple un moteur thermique et un réducteur. L'encombrement du compartiment moteur est donc important et nécessite d'agencer ses différents éléments étroitement les uns contre les autres. Cela nécessite de concevoir des connexions électriques entre ces éléments qui prennent le moins de place possible. Or pour mettre en contact les sorties de la machine électrique et du module d'électronique de puissance, il est courant de prolonger par exemple les sorties du module d'électronique de puissance pour les recourber et les faire venir se mettre en contact avec les sorties de la machine électrique, ce qui consomme de l'espace dans le compartiment moteur.

De plus dans le cas où la machine électrique comporte deux stators, le nombre de connexions électriques de la machine électrique avec le module d'électronique de puissance est doublé, ce qui complique la tâche de fournir un accès à chacune de ces connexions pour leur montage/démontage, sans augmenter le volume à laisser libre dans le compartiment moteur pour permettre cet accès.

Les documents US 2020/313373 A1 et US 2020/195083 A1 décrivent des dispositifs de connexion antérieurs connus.

La présente invention remédie au moins en partie aux inconvénients de la technique antérieure, en fournissant un dispositif de connexion électrique entre une machine électrique et un module d'électronique de puissance, un ensemble machine électrique et module électronique de puissance, et un procédé d'assemblage du dispositif de connexion électrique, qui permettent un assemblage simplifié des connexions entre la machine électrique et le module d'électronique de puissance, tout en nécessitant très peu d'espace pour leur montage ou leur démontage.

A cette fin, l'invention propose un dispositif de connexion électrique destiné à connecter électriquement une machine électrique et un module d'électronique de puissance, le dispositif de connexion électrique comportant :
- une pluralité de barres conductrices de phase, aptes à être connectées à la machine électrique, et
- une pluralité correspondante de barres conductrices d'alimentation, aptes à être connectées au module d'électronique de puissance,

lesdites pluralités comportant des paires d'une portion de barre conductrice de phase et d'une portion de barre conductrice d'alimentation, les portions par paire étant distantes et parallèles entre elles,
le dispositif de connexion électrique étant caractérisé en ce que lesdites portions comportent des bornes de connexion et en ce que le dispositif de connexion électrique comporte :
   - une pluralité de plots conducteurs reliant électriquement les bornes de connexion des paires, les plots conducteurs étant destinés à passer dans au moins un orifice d'une paroi de la machine électrique, et
   - une pluralité d'éléments de maintien des bornes de connexion reliées électriquement, au moins un plot conducteur étant traversé par un des éléments de maintien.

Grâce à l'invention, les connexions électriques entre le module d'électronique de puissance et la machine électrique, sous forme de barres conductrices de puissance, sont très courtes donc peu encombrantes, et permettent à un opérateur de facilement les monter ou les démonter.

En effet, cette configuration du dispositif d'électronique de puissance selon l'invention permet de relier électriquement le module d'électronique de puissance et la machine électrique sans que leurs sorties respectives n'aient à se superposer au contact les unes des autres, donc sans besoin de recourber les barres conductrices de puissance pour arriver à cette mise en contact. La machine électrique comporte par exemple un ou plusieurs stators dont les connexions avec le module d'électronique de puissance bénéficient toutes de ces plots conducteurs permettant de relier électriquement chaque connexion statorique à une connexion d'alimentation du module d'électronique de puissance. Dans ce cas préférentiellement, chaque plot conducteur permet de relier ensemble une connexion statorique de chaque stator et une connexion d'alimentation. Il faut donc comprendre que les paires de portions de barres conductrices peuvent comprendre une paire formée d'une portion de barre conductrice d'alimentation et d'une portion de barre conductrice de phase d'un stator, et une autre paire formée de la même portion de barre conductrice d'alimentation et d'une portion de barre conductrice de phase d'un autre stator.

De plus l'invention s'applique à une machine électrique monophasée ou polyphasée.

Selon une caractéristique avantageuse du dispositif de connexion électrique selon l'invention, celui-ci comporte un surmoulage électriquement isolant maintenant au moins deux des plots conducteurs ensemble.

Selon un mode de réalisation, le surmoulage électriquement isolant comporte des moyens de positionnement de la pluralité de barres conductrices de phase. Cela permet à un opérateur de monter plusieurs plots conducteurs sur les barres conductrices de phase simultanément, sans décalage entre les plots conducteurs et les bornes de connexion des barres conductrices de phase. Préférentiellement, le surmoulage électriquement isolant maintient tous les plots conducteurs dans un seul bloc de matière isolante, inséré dans un orifice de la paroi de la machine électrique par un mouvement d'ensemble selon une unique direction.

Les moyens de positionnement sont par exemple formés par un ergot apte à positionner les portions de barres conductrices de phase selon une direction principale d'allongement des portions de barres conductrices de phase. En variante, les moyens de positionnement sont aptes à positionner en plus ou à la place, les portions de barres conductrices d'alimentation selon la direction principale d'allongement des portions de barres conductrices.

Selon une caractéristique avantageuse du dispositif de connexion électrique selon l'invention, le surmoulage électriquement isolant comporte en plus ou à la place des moyens de positionnement, des moyens de centrage d'au moins un des plots conducteurs sur au moins une des bornes de connexion. Ces moyens de centrage aident au positionnement des plots conducteurs sur les bornes de connexion des barres conductrices d'alimentation ou de phase préférentiellement selon une direction différente de l'aide au positionnement fournie par les moyens de positionnement.

Les moyens de centrage comportent par exemple au moins une rainure apte à recevoir au moins une nervure correspondante d'une protection isolante d'au moins une des pluralités de barres conductrices. En variante les moyens de centrage comporte au moins une nervure apte à s'insérer dans une rainure correspondante d'une protection isolante d'au moins une des pluralités de barres conductrices.

Dans un mode de réalisation, le dispositif de connexion selon l'invention comporte en outre au moins un écrou monté solidairement à au moins une des bornes de connexion des portions de barres conductrices de phase, et la borne de connexion est interposée entre un des plots conducteurs et l'écrou, les éléments de maintien comprenant au moins une vis montée dans le plot conducteur et vissée dans l'écrou.

Préférentiellement, les plots conducteurs ont une longueur supérieure à une dimension du surmoulage électriquement isolant dans une direction d'allongement principale des plots conducteurs. Cela facilite le contact électrique entre les plots conducteurs et les bornes de connexion des barres conductrices d'alimentation ou de phase.

Dans un mode de réalisation de l'invention, la machine électrique comporte deux stators, la pluralité de barres conductrices de phase comportant deux barres conductrices par phase, connectées ensemble à une extrémité d'un des plots conducteurs, l'autre extrémité du plot conducteur étant connectée à une portion correspondante d'une barre conductrice d'alimentation. La connexion desdites deux barres conductrices par phase à ladite extrémité d'un des plots conducteurs se fait par exemple via une portion d'une des deux barres conductrices de phase, cette portion pouvant par exemple comporter un écrou.

L'invention concerne aussi un ensemble machine électrique et module électronique de puissance, caractérisé en ce qu'il comporte en outre un dispositif de connexion électrique de la machine électrique avec le module électronique de puissance selon l'invention.

L'invention concerne enfin un procédé d'assemblage d'un dispositif de connexion électrique d'une machine électrique avec un module d'électronique de puissance selon l'invention, comportant les étapes de :
- raccordement électrique de la pluralité de barres conductrices d'alimentation au module d'électronique de puissance,
- raccordement électrique de la pluralité de barres conductrices de phase à un stator de la machine électrique,
- insertion des plots conducteurs dans l'au moins un orifice de la paroi de la machine électrique,
- positionnement des bornes de connexion des portions de barres conductrices d'alimentation en vis-à-vis des plots conducteurs, et
- assemblage des éléments de maintien dans les plots conducteurs.

Dans les modes de réalisation de l'invention dans lesquels la machine électrique comporte deux stators et où les éléments de maintien comprennent chacun une vis montée dans un plot conducteur et vissée dans un écrou, un procédé d'assemblage d'un dispositif de connexion électrique d'une machine électrique avec un module d'électronique de puissance selon l'invention comporte les étapes de :
- raccordement électrique de la pluralité de barres conductrices d'alimentation au module d'électronique de puissance,
- raccordement électrique de premières barres conductrices de phase de la pluralité de barres conductrices de phase à l'un des stators de la machine électrique, les bornes de connexion des portions des premières barres conductrices de phase étant chacune solidaire d'un écrou,
- raccordement électrique de deuxièmes barres conductrices de phase de la pluralité de barres conductrices de phase à l'autre des stators de la machine électrique et superposition des bornes de connexion des portions des deuxièmes barres conductrices de phase aux bornes de connexion des portions des premières barres conductrices de phase, du côté opposé aux écrous,
- insertion des plots conducteurs dans l'au moins un orifice de la paroi,
- positionnement des bornes de connexion des portions de barres conductrices d'alimentation en vis-à-vis des plots conducteurs, et
- vissage de vis dans lesdits écrous, les vis passant au travers des bornes de connexion des portions de barres conductrices d'alimentation, des plots conducteurs, des bornes de connexion des portions des premières barres conductrices de phase et des bornes de connexion des portions des deuxièmes barres conductrices de phase.

Dans ces procédés d'assemblage du dispositif de connexion selon l'invention, et dans l'ensemble selon l'invention :
- l'insertion des plots conducteurs dans l'orifice de la paroi de la machine se fait préférentiellement par un seul mouvement d'ensemble d'un surmoulage électriquement isolant maintenant les plots conducteurs ensemble, selon une première direction, et
- le positionnement des bornes de connexion des portions de barres conductrices d'alimentation en vis-à-vis des plots conducteurs se fait par un seul mouvement d'ensemble selon une deuxième direction orthogonale à la première direction. Notamment cette étape de positionnement se fait en insérant la pluralité de barres conductrices d'alimentation dans un trou de la paroi de la machine électrique, distinct de l'orifice de la paroi de la machine électrique. Le procédé d'assemblage permet donc de connecter la machine électrique et le module d'électronique de puissance dans le compartiment moteur d'un véhicule en seulement deux mouvements d'ensemble et une étape d'assemblage ou de vissage, ce qui facilite cette connexion dans un espace très réduit.

L'ensemble selon l'invention et les procédés d'assemblage selon l'invention comportent des avantages analogues à ceux du dispositif de connexion électrique selon l'invention et réciproquement.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] est une vue en perspective d'un dispositif de connexion électrique selon l'invention, dans un mode de réalisation de l'invention,
[Fig.2] est une vue en coupe d'une partie du dispositif de connexion électrique de la [Fig.1],
[Fig.3] illustre par deux vues en perspective, des plots conducteurs surmoulés du dispositif de connexion électrique de la [Fig.1],
[Fig.4] représente des étapes d'un procédé d'assemblage d'un dispositif de connexion électrique selon l'invention, dans un mode de réalisation de l'invention,
[Fig.5] représente une étape du procédé d'assemblage de la [Fig.4], correspondant à une insertion des plots conducteurs de la [Fig.3] dans une machine électrique,
[Fig.6] représente en coupe le surmoulage des plots de la [Fig.3] positionnés sur des barres conductrices de phase de la machine électrique après l'étape de la [Fig.5], et
[Fig.7] représente en coupe le dispositif de connexion électrique selon l'invention assemblé dans une machine électrique après les étapes du procédé d'assemblage de la [Fig.5].

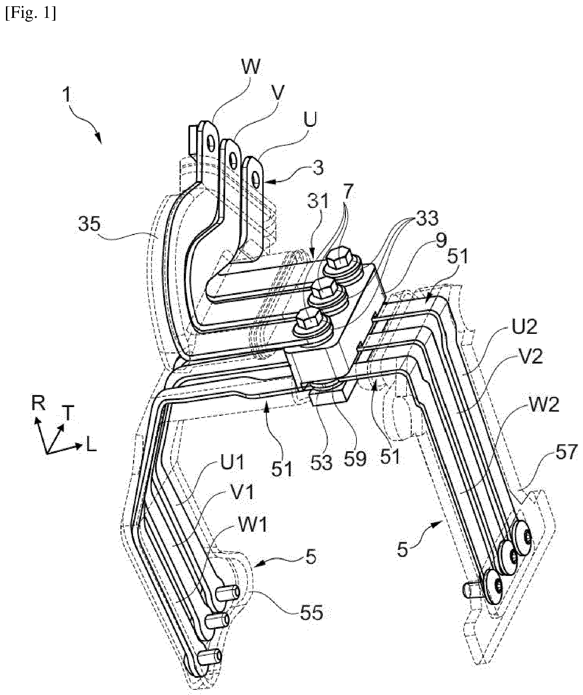

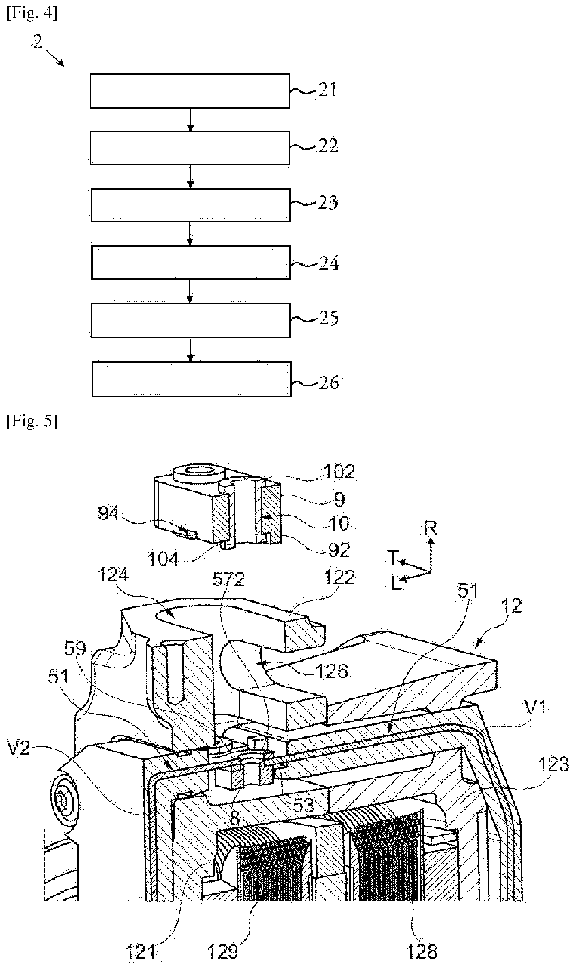

Dans un exemple d'utilisation de l'invention, un module d'électronique de puissance (non représenté) est connecté d'une part à une batterie de traction d'un véhicule électrique, et d'autre part à une machine électrique 12 (représentée [Fig.5]) qu'il alimente en courant triphasé. La machine électrique 12 est dans cet exemple une machine électrique de traction du véhicule électrique. La connexion électrique du module d'électronique de puissance à la machine électrique 12 se fait par l'intermédiaire d'un dispositif de connexion électrique 1 selon l'invention, représenté sur la [Fig.1].

Le dispositif de connexion électrique 1 selon l'invention comporte une pluralité 3 de barres conductrices d'alimentation U, V, W destinées à être connectées au module d'électronique de puissance, et une pluralité 5 de barres conductrices de phase destinées à être connectées à la machine électrique 12 (représentée [Fig.5]). Ces barres conductrices sont également communément appelées « barres bus » et permettent de transporter un courant de l'ordre de dizaines d'ampères. Les barres conductrices d'alimentation U, V, W sont destinées à être connectées chacune à une des phases d'alimentation en sortie du module d'électronique de puissance.

La machine électrique 12 comportant deux stators 128 et 129 (visibles [Fig.5]), la pluralité 5 de barres conductrices de phase comporte des premières barres conductrices de phase U1, V1, W1 destinées à être connectées au stator 128 et des deuxièmes barres conductrices de phase U2, V2, W2 destinées à être connectées au stator 129. De plus, dans ce mode de réalisation de l'invention, la machine électrique 12 est une machine à flux axial.

L'Homme du métier saura adapter ce mode de réalisation à une variante de l'invention dans laquelle la machine électrique 12 est monophasée ou polyphasée avec plus de trois phases, et/ou dans laquelle la machine électrique 12 comporte un seul stator ou plus de deux stators, en adaptant le nombre de barres conductrices d'alimentation et de barres conductrices de phase de la machine électrique en conséquence. L'invention est de plus transposable à une utilisation incluant une machine électrique à flux radial.

Revenant à la [Fig.1], la pluralité 3 de barres conductrices d'alimentation U, V, W et la pluralité 5 de barres conductrices de phase U1, V1, W1, U2, V2, W2 définissent des paires de portions 31, 51 de barres conductrices parallèles entre elles en étant distantes l'une de l'autre. Ces paires sont chacune formée d'une portion 51 d'une barre conductrice de phase U1, V1, W1, U2, V2, ou W2 et d'une portion 31 d'une barre conductrice d'alimentation U, V, ou W. Dans ce mode de réalisation de l'invention, chaque barre conductrice d'alimentation U, V, ou W comporte une portion 31 appairée à une portion 51 de première barre conductrice de phase respectivement U1, V1, ou W1 ou à une portion 51 de deuxième barre conductrice de phase respectivement U2, V2, ou W2.

Dans chacune de ces six paires de portions 31, 51, la portion 31 de barre conductrice d'alimentation U, V, ou W comporte une borne de connexion 33 se superposant à distance d'une borne de connexion de la portion 51 de barre conductrice de phase de la paire, c'est-à-dire d'une borne de connexion 53 de la portion 51 de première barre conductrice de phase respectivement U1, V1, ou W1, ou d'une borne de connexion 59 de la portion 51 de deuxième barre conductrice de phase respectivement U2, V2, ou W2. Les bornes de connexion 33, 53, 59 des portions 31, 51 de barres conductrices sont réalisées sous forme d'anneaux plats conducteurs.

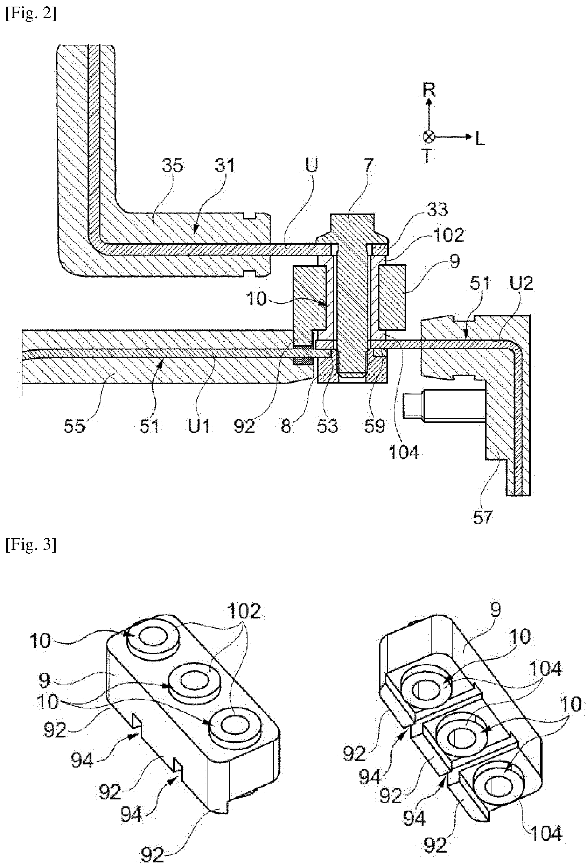

Afin de relier entre elles les portions 31, 51 de chaque paire de portions 31, 51 de barres conductrices, des plots conducteurs 10 représentés [Fig.2], permettent de combler la distance séparant ces portions 31, 51. Plus précisément dans ce mode de réalisation de l'invention, chaque plot conducteur 10 relie électriquement la borne de connexion 59 de la portion 51 de deuxième barre conductrice de phase U2, V2, ou W2 à la borne de connexion 33 de la portion 31 de barre conductrice d'alimentation respectivement U, V, ou W. Les bornes de connexion 59 des portions 51 de deuxième barre conductrice de phase U2, V2, ou W2 sont chacune au contact d'une borne de connexion 53 d'une portion 51 de première barre conductrice de phase respectivement U1, V1, ou W1, ce qui permet de relier électriquement les portions 31 de barre conductrice d'alimentation U, V, ou W aux portions 51 de première barre conductrice de phase respectivement U1, V1, ou W1.

Chacun de ces assemblages conducteurs dans lequel sont successivement en contact une borne de connexion 33 d'une portion 31 de barre conductrice d'alimentation, un plot conducteur 10, une borne de connexion 59 d'une portion 51 de deuxième barre conductrice de phase, et une borne de connexion 53 d'une portion 51 de première barre conductrice de phase, est maintenu ainsi assemblé grâce à une vis 7 traversant le plot conducteur 10. La tête de la vis 7 comprime la borne de connexion 33 d'une portion 31 de barre conductrice d'alimentation de chacun de ces assemblages et vient se visser dans un écrou 8 soudé à la borne de connexion 53 de la portion 51 de première barre conductrice de phase U1, V1, ou W1 de cet assemblage, du côté opposé à la borne de connexion 59 d'une portion de deuxième barre conductrice de phase respectivement U2, V2, ou W2 de cet assemblage.

Les vis 7 sont des moyens de maintien du dispositif de connexion électrique 1. En variante d'autres moyens de maintien sont utilisables, par exemple des pions traversant chaque plot conducteur 10 et se verrouillant sous la borne de connexion 53 de la portion 51 de première barre conductrice de phase U1, V1, ou W1, grâce à des ergots rétractables agencés dans les pions.

Afin de favoriser le contact électrique entre la borne de connexion 33 d'une portion 31 de barre conductrice U, V, ou W et le plot conducteur 10 correspondant, celui-ci comporte un épaulement 102 à son extrémité venant au contact de cette borne de connexion 33. De même afin de favoriser le contact électrique entre la borne de connexion 59 d'une portion de deuxième barre conductrice de phase U2, V2, ou W2 et le plot conducteur 10 correspondant, celui-ci comporte un épaulement 104 à son extrémité venant au contact de cette borne de connexion 59.

Les plots conducteurs 10 s'étendent chacun longitudinalement selon une direction d'allongement principale correspondant, lorsque le dispositif de connexion électrique 1 est assemblé et connecté à la machine électrique 12, à une direction radiale R, orthogonale aux portions 31 de barres conductrices d'alimentation et 51 de barres conductrices de phase du dispositif de connexion électrique 1. Cette direction radiale R fait référence à la direction radiale de la machine électrique 12, orthogonale à une direction axiale L parallèle à l'axe de rotation de la machine électrique 12. La direction axiale L correspond également à une direction principale d'allongement des portions 31 et 51 des barres conductrices lorsque le dispositif de connexion électrique 1 est assemblé et connecté à la machine électrique 12. La direction orthogonale à cette direction axiale L et à la direction radiale R est appelée direction transverse T.

Afin de faciliter l'assemblage du dispositif de connexion électrique 1, les plots conducteurs 10 sont maintenus ensemble dans un surmoulage électriquement isolant 9. Ce surmoulage électriquement isolant 9 forme un bloc dont dépassent les épaulements 102 et 104 des plots conducteurs 10, dans leur direction d'allongement principale.

La pluralité 3 de barres conductrices d'alimentation U, V, W comporte elle-même une protection isolante 35 surmoulée à ces barres conductrices d'alimentation. De même les premières barres conductrices de phase U1, V1, W1 comportent une protection isolante 55 surmoulée autour d'elles, et les deuxièmes barres conductrices de phase U2, V2, W2 comportent une protection isolante 57 surmoulée autour d'elles.

Le surmoulage électriquement isolant 9 comporte un ergot 92 servant de butée lors d'un déplacement selon la direction axiale des portions 51 de deuxièmes barres conductrices de phase U2, V2, W2, visant à superposer leurs bornes de connexion 59 aux bornes de connexion 53 correspondantes des portions 51 de premières barres conductrices de phase U1, V1, W1.

L'ergot 92 forme donc un moyen de positionnement des deuxièmes barres conductrices de phase U2, V2, W2. De plus en étant intercalé entre le surmoulage 55 des premières barres conductrices de phase et les bornes de connexion 59 des deuxièmes barres conductrices de phase, l'ergot 92 a également une fonction de positionnement des plots conducteurs 10 sur les bornes de connexion 53 des portions 51 des premières barres conductrices de phase U1, V1, W1. En variante, le surmoulage électriquement isolant 9 comporte de plus un moyen de positionnement similaire permettant de faciliter le positionnement des barres conductrices d'alimentation U, V, W.

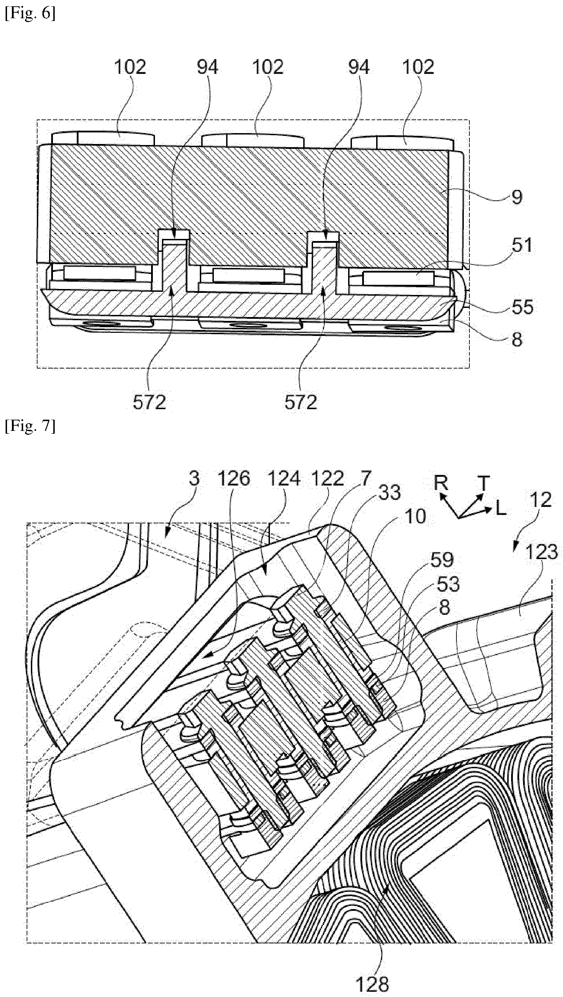

Comme visible sur la [Fig.3], le surmoulage électriquement isolant 9 comporte également des rainures 94 s'étendant selon la direction axiale L et entrecoupant l'ergot 92 qui s'étend le long du surmoulage électriquement isolant 9 dans la direction transverse T. Ces rainures 94 permettent de centrer les plots conducteurs 10 sur les bornes de connexion 53 des premières barres conductrices de phase U1, V1, W1, grâce à des nervures 572 (visibles figures 5 et 6) correspondantes de la protection isolante 57, venant s'emboîter dans les rainures 94.

Les rainures 94 sont donc des moyens de centrage des plots conducteurs 10 sur les bornes de connexion 53. En variante, ces moyens de centrage sont des nervures et la protection isolante 57 comporte des rainures correspondantes. Dans une autre variante, le surmoulage électriquement isolant 9 comporte de plus des moyens de centrage similaires, coopérant avec la protection isolante 55 des deuxièmes barres conductrices de phase U1, V1, W1, ou coopérant avec la protection isolante 35 des barres conductrices d'alimentation U, V, W, pour centrer les plots conducteurs 10 sur leurs bornes de connexion respectives 59 ou 33.

On décrit maintenant, en relation avec la [Fig.4], un procédé d'assemblage 2 selon l'invention, du dispositif de connexion électrique 1 connectant la machine électrique 12 avec le module d'électronique de puissance.

Une première étape 21 du procédé est le raccordement électrique de la pluralité 3 de barres conductrices d'alimentation U, V, W au module d'électronique de puissance.

Une deuxième étape 22 du procédé est le raccordement électrique des premières barres conductrices de phase U1, V1, W1 au stator 128 correspondant de la machine électrique 12.

Une troisième étape 23 du procédé est le raccordement électrique des deuxièmes barres conductrices de phase U2, V2, W2 au stator 129 correspondant de la machine électrique 12. Dans cette troisième étape 23, on superpose de plus les bornes de connexion 59 des portions 51 des deuxièmes barres conductrices de phase U2, V2, W2 aux bornes de connexion 53 des portions 51 des premières barres conductrices de phase U1, V1, W1, du côté opposé aux écrous 8.

Bien entendu l'ordre des étapes de raccordement électrique est modifiable, la superposition des bornes de connexion 53 et 59 des premières et deuxièmes barres conductrices de phase s'effectuant après leurs raccordements électriques respectifs aux stators 128 et 129.

Une quatrième étape 24 du procédé, représentée [Fig.5], est l'insertion des plots conducteurs 10 dans un orifice 124 d'une paroi 122 de la machine électrique 12, l'orifice 124 permettant d'accéder selon la direction radiale R, aux bornes de connexion 53 et 59 des premières et deuxièmes barres conductrices de phase U1, V1, W1, U2, V2, W2. L'orifice 124 est ici agencé sur le dessus d'un boîtier d'interconnexion réalisé dans une extension radiale d'un carter 121 de la machine électrique 12, logeant le stator 129, l'autre stator 128 étant logé dans un carter 123 de la machine électrique 12.

Cette insertion se fait donc principalement par un déplacement dans la direction radiale R, c'est-dire dans la direction radiale R sans mouvement significatif dans les autres directions. Dans cette quatrième étape 24, la position selon la direction axiale L des plots conducteurs 10 est assurée par l'ergot 92, et la position selon la direction transversale T des plots conducteurs 10 est assurée grâce aux rainures 94 coopérant avec les nervures 572, comme représenté [Fig.6]. L'ergot 92 sert également de dispositif de détrompage, en permettant à l'opérateur de tourner le bloc formé des plots conducteurs 10 et du surmoulage électriquement isolant 9 dans le bon sens avant son insertion dans l'orifice 124.

La cinquième étape 25 est le positionnement 25 des bornes de connexion 33 des portions 31 de barres conductrices d'alimentation U, V, W en vis-à-vis des plots conducteurs 10, en passant les portions 31 de ces barres conductrices d'alimentation au travers d'un trou 126 de la paroi 122, représenté [Fig.7]. Cette étape 25 se fait principalement par un déplacement dans la direction axiale L de la machine électrique 12 vers le module d'électronique de puissance, c'est-à-dire sans mouvement significatif dans les autres directions. Le trou 126 est agencé sur une surface parallèle aux directions transverse T et radiale R de la paroi 122, et la protection isolante 35 des barres conductrices d'alimentation est entourée d'un joint d'étanchéité (non représenté) venant fermer de manière étanche le trou 126 lors de cette étape 25 de positionnement.

En variante de réalisation l'étape 25 se fait par un déplacement dans la direction axiale L du module d'électronique de puissance vers la machine électrique 12.

Enfin la dernière étape 26 du procédé d'assemblage 2 selon l'invention est le maintien par vissage des bornes de connexion 33, 53 et 59 entre elles, en utilisant les vis 7 qui viennent se bloquer dans les écrous 8. Chaque vis traverse une borne de connexion 33 d'une portion 31 de barre conductrice alimentation U, V, ou W, un plot conducteur 10, une borne de connexion 53 d'une portion 51 de première barre conductrice de phase respectivement U1, V1, ou W1 et une borne de connexion 59 d'une portions 51 de deuxième barre conductrice de phase respectivement U2, V2, ou W2.
Il est à noter que dans ce mode de réalisation de l'invention, préalablement aux étapes de raccordement électrique 22 et 23, on vient fermer la machine électrique 12 en vissant le carter 123 logeant le stator 128 contre le carter 121 logeant l'autre stator 129, un rotor monté sur un arbre rotorique étant également logé entre les deux stators 128, 129 dans ces carters 121 et 123. En effet sur la machine électrique 12, le raccordement électrique des premières et deuxièmes barres conductrices aux stators 128 et 129 se fait par l'extérieur du carter de la machine électrique 12. D'autres variantes sont bien entendu envisageables avec des machines électriques dans lesquelles le raccordement électrique des barres conductrices de phase se fait avant la fermeture de leurs carters.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de connexion électrique (1) destiné à connecter électriquement une machine électrique (12) et un module d'électronique de puissance, le dispositif de connexion électrique (1) comportant :
- une pluralité (5) de barres conductrices de phase (U1, V1, W1, U2, V2, W2), aptes à être connectées à la machine électrique (12), et
- une pluralité (3) correspondante de barres conductrices d'alimentation (U, V, W), aptes à être connectées au module d'électronique de puissance,
lesdites pluralités (3, 5) comportant des paires d'une portion (51) de barre conductrice de phase (U1, V1, W1, U2, V2, W2) et d'une portion (31) de barre conductrice d'alimentation (U, V, W), les portions (31, 51) par paire étant distantes et parallèles entre elles,
lesdites portions (31, 51) comportent des bornes de connexion (33, 53, 59) et en ce que le dispositif de connexion électrique (1) comporte :
- une pluralité de plots conducteurs (10) reliant électriquement les bornes de connexion (33, 53, 59) des paires, les plots conducteurs (10) étant destinés à passer dans au moins un orifice (124) d'une paroi (122) de la machine électrique (12), et
- une pluralité d'éléments de maintien (7) des bornes de connexion (33, 53, 59) reliées électriquement, **caractérisé en ce qu'**au moins un plot conducteur (10) est traversé par un des éléments de maintien (7).

2. Dispositif de connexion électrique (1) selon la revendication 1, comportant un surmoulage électriquement isolant (9) maintenant au moins deux des plots conducteurs (10) ensemble.

3. Dispositif de connexion électrique (1) selon la revendication 2, dans lequel le surmoulage électriquement isolant (9) comporte des moyens de positionnement (92) de la pluralité de barres conductrices de phase (U1, V1, W1, U2, V2, W2).

4. Dispositif de connexion électrique (1) selon la revendication 3, dans lequel les moyens de positionnement (92) sont formés par un ergot apte à positionner les portions (51) de barres conductrices de phase (U1, V1, W1, U2, V2, W2) selon une direction principale d'allongement (L) des portions (51) de barres conductrices de phase (U1, V1, W1, U2, V2, W2).

5. Dispositif de connexion électrique (1) selon l'une quelconque des revendications 2 à 4, dans lequel le surmoulage électriquement isolant (9) comporte des moyens de centrage (94) d'au moins un des plots conducteurs (10) sur au moins une des bornes de connexion (53).

6. Dispositif de connexion électrique (1) selon la revendication 5, dans lequel les moyens de centrage (94) comportent au moins une rainure apte à recevoir au moins une nervure (572) correspondante d'une protection isolante (55) d'au moins une des pluralités (5) de barres conductrices (U1,V1,W1).

7. Dispositif de connexion électrique (1) selon l'une quelconque des revendications 1 à 6, comportant en outre au moins un écrou (8) monté solidairement à au moins une des bornes de connexion (53) des portions (51) de barres conductrices de phase (U1, V1, W1), et dans lequel la borne de connexion (53) est interposée entre un des plots conducteurs (10) et l'écrou (8), les éléments de maintien (7) comprenant au moins une vis montée dans le plot conducteur (10) et vissée dans l'écrou (8).

8. Dispositif de connexion électrique (1) selon l'une quelconque des revendications 2 à 7, dans lequel les plots conducteurs (10) ont une longueur supérieure à une dimension du surmoulage électriquement isolant (9) dans une direction d'allongement principale (H) des plots conducteurs (10).

9. Dispositif de connexion électrique (1) selon l'une quelconque des revendications 1 à 8, dans lequel la machine électrique (12) comportant deux stators (128, 129), la pluralité (5) de barres conductrices de phase (U1, V1, W1, U2, V2, W2) comporte deux barres conductrices par phase, connectées ensemble à une extrémité d'un des plots conducteurs (10), l'autre extrémité du plot conducteur (10) étant connectée à une portion (31) correspondante d'une barre conductrice d'alimentation (U, V, W).

10. Ensemble machine électrique (12) et module électronique de puissance, **caractérisé en ce qu'**il comporte en outre un dispositif de connexion électrique (1) de la machine électrique (12) avec le module électronique de puissance selon l'une quelconque des revendications 1 à 9.

11. Procédé d'assemblage d'un dispositif de connexion électrique (1) d'une machine électrique (12) avec un module d'électronique de puissance selon l'une quelconque des revendications 1 à 9, comportant les étapes de :
- raccordement électrique (21) de la pluralité de barres conductrices d'alimentation (U, V, W) au module d'électronique de puissance,
- raccordement électrique (22, 23) de la pluralité de barres conductrices de phase (U1, V1, W1, U2, V2, W2) à un stator (128, 129) de la machine électrique (12),
- insertion (24) des plots conducteurs (10) dans l'au moins un orifice (124) de la paroi (122) de la machine électrique (12),
- positionnement (25) des bornes de connexion (33) des portions (31) de barres conductrices d'alimentation (U, V, W) en vis-à-vis des plots conducteurs (10), et
- assemblage (26) des éléments de maintien (7) dans les plots conducteurs (10).

## Patentansprüche

1. Vorrichtung (1) zur elektrischen Verbindung, die dazu bestimmt ist, eine elektrische Maschine (12) und ein Leistungselektronikmodul elektrisch zu verbinden, wobei die Vorrichtung (1) zur elektrischen Verbindung umfasst:
- eine Mehrzahl (5) von leitenden Phasenschienen (U1, V1, W1, U2, V2, W2), die dazu geeignet sind, mit der elektrischen Maschine (12) verbunden zu werden, und
- eine entsprechende Mehrzahl (3) von leitenden Versorgungsschienen (U, V, W), die dazu geeignet sind, mit dem Leistungselektronikmodul verbunden zu werden,
wobei die Mehrzahlen (3, 5) Paare aus einem Abschnitt (51) einer leitenden Phasenschiene (U1, V1, W1, U2, V2, W2) und aus einem Abschnitt (31) einer leitenden Versorgungsschiene (U, V, W) umfassen, wobei die Abschnitte (31, 51) je Paar beabstandet und parallel zueinander sind,
wobei die Abschnitte (31, 51) Verbindungsklemmen (33, 53, 59) umfassen und dass die Vorrichtung (1) zur elektrischen Verbindung umfasst:
- eine Mehrzahl von leitenden Kontaktstücken (10), die die Verbindungsklemmen (33, 53, 59) der Paare elektrisch verbinden, wobei die leitenden Kontaktstücke (10) dazu bestimmt sind, in mindestens eine Öffnung (124) einer Wand (122) der elektrischen Maschine (12) zu gelangen, und
- eine Mehrzahl von Halteelementen (7) für die elektrisch verbundenen Verbindungsklemmen (33, 53, 59), **dadurch gekennzeichnet, dass** mindestens ein leitfähiges Kontaktstück (10) von einem der Halteelemente (7) durchquert wird.

2. Vorrichtung (1) zur elektrischen Verbindung nach Anspruch 1, umfassend eine elektrisch isolierende Umspritzung (9), die mindestens zwei der leitenden Kontaktstücke (10) zusammenhält.

3. Vorrichtung (1) zur elektrischen Verbindung nach Anspruch 2, wobei die elektrisch isolierende Umspritzung (9) Positioniermittel (92) zum Positionieren der Mehrzahl von leitenden Phasenschienen (U1, V1, W1, U2, V2, W2) umfasst.

4. Vorrichtung (1) zur elektrischen Verbindung nach Anspruch 3, wobei die Positioniermittel (92) durch einen Vorsprung gebildet werden, der dazu geeignet ist, die Abschnitte (51) von leitenden Phasenschienen (U1, V1, W1, U2, V2, W2) entlang einer Haupterstreckungsrichtung (L) der Abschnitte (51) von leitenden Phasenschienen (U1, V1, W1, U2, V2, W2) zu positionieren.

5. Vorrichtung (1) zur elektrischen Verbindung nach einem der Ansprüche 2 bis 4, wobei die elektrisch isolierende Umspritzung (9) Zentriermittel (94) zum Zentrieren mindestens eines der leitenden Kontaktstücke (10) auf mindestens einer der Verbindungsklemmen (53) umfasst.

6. Vorrichtung (1) zur elektrischen Verbindung nach Anspruch 5, wobei die Zentriermittel (94) mindestens eine Nut umfassen, die dazu geeignet ist, mindestens eine entsprechende Rippe (572) eines isolierenden Schutzes (55) mindestens einer der Mehrzahlen (5) von leitenden Schienen (U1, V1, W1) aufzunehmen.

7. Vorrichtung (1) zur elektrischen Verbindung nach einem der Ansprüche 1 bis 6, die ferner mindestens eine Mutter (8) umfasst, die fest an mindestens einer der Verbindungsklemmen (53) der Abschnitte (51) von leitenden Phasenschienen (U1, V1, W1) montiert ist, und bei der die Verbindungsklemme (53) zwischen einem der leitenden Kontaktstücke (10) und der Mutter (8) angeordnet ist, wobei die Halteelemente (7) mindestens eine Schraube aufweisen, die in dem leitenden Kontaktstück (10) montiert ist und in die Mutter (8) geschraubt ist.

8. Vorrichtung (1) zur elektrischen Verbindung nach einem der Ansprüche 2 bis 7, wobei die leitenden Kontaktstücke (10) eine Länge haben, die größer als ein Maß der elektrisch isolierenden Umspritzung (9) in einer Haupterstreckungsrichtung (H) der leitenden Kontaktstücke (10) ist.

9. Vorrichtung (1) zur elektrischen Verbindung nach einem der Ansprüche 1 bis 8, wobei, wenn die elektrische Maschine (12) zwei Statoren (128, 129) umfasst, die Mehrzahl (5) von leitenden Phasenschienen (U1, V1, W1, U2, V2, W2) zwei leitende Schienen je Phase umfasst, die zusammen an ein Ende eines der leitenden Kontaktstücke (10) angeschlossen sind, wobei das andere Ende des leitenden Kontaktstücks (10) an einen entsprechenden Abschnitt (31) einer leitenden Versorgungsschiene (U, V, W) angeschlossen ist.

10. Anordnung aus elektrischer Maschine (12) und Leistungselektronikmodul, **dadurch gekennzeichnet, dass** sie ferner eine Vorrichtung (1) zur elektrischen Verbindung der elektrischen Maschine (12) mit dem Leistungselektronikmodul nach einem der Ansprüche 1 bis 9 umfasst.

11. Verfahren zur Montage einer Vorrichtung (1) zur elektrischen Verbindung einer elektrischen Maschine (12) mit einem Leistungselektronikmodul nach einem der Ansprüche 1 bis 9, umfassend die folgenden Schritte:
- elektrisches Anschließen (21) der Mehrzahl von leitenden Versorgungsschienen (U, V, W) an das Leistungselektronikmodul,
- elektrisches Anschließen (22, 23) der Mehrzahl von leitenden Phasenschienen (U1, V1, W1, U2, V2, W2) an einen Stator (128, 129) der elektrischen Maschine (12),
- Einführen (24) der leitenden Kontaktstücke (10) in die mindestens eine Öffnung (124) der Wand (122) der elektrischen Maschine (12),
- Positionieren (25) der Verbindungsklemmen (33) der Abschnitte (31) von leitenden Versorgungsschienen (U, V, W) gegenüber den leitenden Kontaktstücken (10), und
- Montieren (26) der Halteelemente (7) in den leitenden Kontaktstücken (10).

## Claims

1. Electrical connection device (1) intended to electrically connect an electrical machine (12) and a power electronics module, the electrical connection device (1) comprising:
- a plurality (5) of phase busbars (U1, V1, W1, U2, V2, W2), able to be connected to the electrical machine (12), and
- a corresponding plurality (3) of power supply busbars (U, V, W), able to be connected to the power electronics module,
said pluralities (3, 5) comprising pairs consisting of a phase busbar (U1, V1, W1, U2, V2, W2) portion (51) and a power supply busbar (U, V, W) portion (31), the portions (31, 51) in each pair being spaced apart and parallel to one another,
said portions (31, 51) comprise connection terminals (33, 53, 59) and in that the electrical connection device (1) comprises:
- a plurality of conductive pads (10) electrically connecting the connection terminals (33, 53, 59) of the pairs, the conductive pads (10) being intended to pass through at least one orifice (124) in a wall (122) of the electrical machine (12), and
- a plurality of holding elements (7) for holding the electrically connected connection terminals (33, 53, 59), **characterized in that** at least one conductive pad (10) is passed through by one of the holding elements (7).

2. Electrical connection device (1) according to Claim 1, comprising an electrically insulating overmolding (9) that holds at least two of the conductive pads (10) together.

3. Electrical connection device (1) according to Claim 2, wherein the electrically insulating overmolding (9) comprises positioning means (92) for positioning the plurality of phase busbars (U1, V1, W1, U2, V2, W2).

4. Electrical connection device (1) according to Claim 3, wherein the positioning means (92) are formed by a lug able to position the phase busbar (U1, V1, W1, U2, V2, W2) portions (51) in a primary direction of elongation (L) of the phase busbar (U1, V1, W1, U2, V2, W2) portions (51).

5. Electrical connection device (1) according to any one of Claims 2 to 4, wherein the electrically insulating overmolding (9) comprises centering means (94) for centering at least one of the conductive pads (10) on at least one of the connection terminals (53).

6. Electrical connection device (1) according to Claim 5, wherein the centering means (94) comprise at least one groove able to receive at least one corresponding rib (572) of an insulating protection (55) of at least one of the pluralities (5) of busbars (U1, V1, W1).

7. Electrical connection device (1) according to any one of Claims 1 to 6, furthermore comprising at least one nut (8) mounted integrally with at least one of the connection terminals (53) of the phase busbar (U1, V1, W1) portions (51), and wherein the connection terminal (53) is interposed between one of the conductive pads (10) and the nut (8), the holding elements (7) comprising at least one screw mounted in the conductive pad (10) and screwed into the nut (8).

8. Electrical connection device (1) according to any one of Claims 2 to 7, wherein the conductive pads (10) have a length greater than a dimension of the electrically insulating overmolding (9) in a primary direction of elongation (H) of the conductive pads (10).

9. Electrical connection device (1) according to any one of Claims 1 to 8, wherein, with the electrical machine (12) comprising two stators (128, 129), the plurality (5) of phase busbars (U1, V1, W1, U2, V2, W2) comprises two busbars per phase, connected together at one end of one of the conductive pads (10), the other end of the conductive pad (10) being connected to a corresponding portion (31) of a power supply busbar (U, V, W).

10. Assembly of an electrical machine (12) and power electronics module, **characterized in that** it furthermore comprises an electrical connection device (1) for electrically connecting the electrical machine (12) to the power electronics module according to any one of Claims 1 to 9.

11. Method for assembling an electrical connection device (1) for electrically connecting an electrical machine (12) to a power electronics module according to any one of Claims 1 to 9, comprising the following steps:
- electrically connecting (21) the plurality of power supply busbars (U, V, W) to the power electronics module,
- electrically connecting (22, 23) the plurality of phase busbars (U1, V1, W1, U2, V2, W2) to a stator (128, 129) of the electrical machine (12),
- inserting (24) the conductive pads (10) into the at least one orifice (124) in the wall (122) of the electrical machine (12),
- positioning (25) the connection terminals (33) of the power supply busbar (U, V, W) portions (31) so as to face the conductive pads (10), and
- assembling (26) the holding elements (7) in the conductive pads (10).
